# EUROPEAN PATENT SPECIFICATION

(11) **EP 3 535 838 B1**
(45) Date of publication and mention of the grant of the patent: **07.06.2023**
(21) Application number: 17791716.8
(22) Date of filing: 06.11.2017
(51) Int. Cl.: H02M 1/36, H02M 3/156, H02M 3/158, H02M 1/00, H02M 3/155

(54) **START-UP CIRCUIT FOR RESONANT POWER CONVERTER ASSEMBLY**
ANLAUFSCHALTUNG FÜR RESONANZLEISTUNGSWANDLERANORDNUNG
CIRCUIT DE DÉMARRAGE POUR CONVERTISSEUR DE PUISSANCE RÉSONANT

(30) Priority: 07.11.2016 EP 16197565
(43) Date of publication of application: 11.09.2019
(73) Proprietor: NPC Tech ApS, 2730 Herlev (DK)
(72) Inventor: RØDGAARD, Martin Schøler, 2800 Kgs. Lyngby (DK); ANDERSEN, Thomas, 2500 Valby (DK); MADSEN, Mickey P, 2730 Herlev (DK); MØNSTER, Jakob Døllner, 2200 Copenhagen N (DK)
(74) Representative: Guardian IP Consulting I/S
(86) International application number: PCT/EP2017/078364
(87) International publication number: WO 2018/083310

(56) References cited:
- EP-A2- 2 481 144
- US-A1- 2014 312 797
- US-A1- 2015 303 806

## Description

The present invention relates to a power converter assembly according to claim 1 and to a method of switching a self-oscillating resonant half bridge power converter from an inactive state to an active state according to claim 14. The power converter assembly comprising at least one self-oscillating resonant half bridge power converter, such as at least one self-oscillating resonant class DE power converter. The at least one self-oscillating resonant half bridge power converter comprises first and second controllable semiconductor switches connected in series between a first DC supply rail and a second DC supply rail. A first gate inductor of the resonant half bridge power converter is connected between a control input of the first controllable semiconductor switch and a first bias voltage and a second gate inductor is connected between a control input of the second controllable semiconductor switch and a common output node of the first and second controllable semiconductor switches. The power converter assembly comprises a start-up circuit configured to inject a first voltage pulse into the control input of the first controllable semiconductor switch for switching the first semiconductor switch from a non-conducting state to a conducting state and initiate oscillation of the self-oscillating resonant half bridge power converter.

### BACKGROUND OF THE INVENTION

Power density and conversion efficiency are normally key performance metrics of a power converter such as AC-DC, DC-AC and DC-DC power converter assemblies where it is desirable to achieve small physical size and high efficiency for a given output power specification. Resonant power converter topologies are well-known types of DC-DC/switched mode power supplies or converters (SMPS) in the art. Resonant power converters are particularly useful for high switching frequencies such as above 1 MHz where switching losses of standard SMPS topologies (Buck, Boost etc.) tend to be unacceptable for conversion efficiency reasons. High switching frequencies are generally desirable because of the resulting decrease of the electrical and physical size of circuit components of the power converter like inductors and capacitors. The smaller components allow increase of the power density of the SMPS. In a resonant power converter an input "chopper" semiconductor switch (often MOSFET or IGBT) of the standard SMPS is replaced with a "resonant" semiconductor switch. The resonant semiconductor switch relies on the resonances of circuit capacitances and inductances to shape the waveform of either the current or the voltage across the switching element such that, when switching takes place, there is no current through or voltage across the switching element. Hence switching loss is largely eliminated in at least some of the intrinsic capacitances of the input switching element such that a dramatic increase of the switching frequency becomes feasible for example to values at and above 1 MHz or 5 MHz or 10 MHz. This feature is known in the art under designations like zero voltage and/or current switching (ZVS and/or ZCS) operation. Commonly used switched mode power converters operating under ZVS and/or ZCS are often designated class E, class F or class DE inverters or power converters.

Resonant power converters which utilize self-oscillation of a set of active switching devices to set a switching frequency of the power converter are known in the art. Various types of self-oscillating resonant power converters are disclosed in the PCT publication document WO 2014/067915.

U.S. 4,605,999 discloses a self-oscillating power converter comprising a self-oscillating inverter circuit build around a single MOSFET switch.

U.S. 5,430,632 discloses a self-oscillating power converter utilizing a pair of MOSFET transistor switches in a half bridge configuration wherein the junction of the two MOSFET transistors is coupled to a reactive network which in turn is connected to an output rectifier. Oscillations are initiated at the gate-to-source terminals of the MOSFET transistor switches by a start-up circuit. The frequency of oscillation is determined by the gate-to-source capacitance of the MOSFET transistor switches and the inductance of an isolated gate drive transformer.

US 2015/303806 A1 also discloses a self-oscillating resonant power converter but is silent as to start-up methodology and circuitry. US 2014/312797 A1 discloses a resonant power converter including a start-up circuit and where self-oscillation is based on transformer feedback.

Securing fast and accurate start-up of self-oscillating resonant power converters remains a continuing challenge because of the non-linear characteristics of the active switching devices, e.g. MOSFETs of a half bridge inverter stage, which alternatingly are switched between conducting and non-conducting states. The non-linearity of the switching devices may leave the power converter in an undesired inactive state, i.e. without self-oscillation, unless a suitable excitation signal is applied by a start-up circuit at a suitable circuit node of the resonant power converter. The properties of the excitation signal must be able to turn-on the switching device(s) and thereby inducing a voltage and current pulse into a node of the converter circuit to initiate the self-oscillation to pulling the converter circuit into the desired self-oscillating or active state. It is generally important to minimize energy loss and avoid error states in connection with the start-up of the self-oscillating resonant power converter. This is particularly important when the self-oscillating resonant power converter is controlled by a burst-mode modulation or on/off control scheme where the entire converter is alternating turned on and off very frequently to control the output voltage and output power.

Consequently, it would be advantageous to provide a start-up circuit that secures fast and reliable activation of self-oscillating resonant power converters and preferably using a minimum of energy.

### SUMMARY OF THE INVENTION

A first aspect of the invention relates to a power converter assembly comprising a first self-oscillating resonant half bridge power converter. The first self-oscillating resonant half bridge power converter comprises:
A first controllable semiconductor switch and a second controllable semiconductor switch connected in series between a first DC supply rail and a second DC supply rail,
a first gate inductor connected between a control input of the first controllable semiconductor switch and a first bias voltage, such as the first DC supply rail,
a second gate inductor connected between a control input of the second controllable semiconductor switch and a common output node of the first and second controllable semiconductor switches, a resonant network connected to the common output node. A switching frequency of the first self-oscillating resonant half bridge power converter is larger than 1 MHz.

The power converter assembly additionally comprises a start-up circuit configured to inject a first voltage pulse into the control input of the first controllable semiconductor switch for switching the first semiconductor switch from a non-conducting state to a conducting state to switch the first self-oscillating resonant half bridge power converter from an inactive state to an active state. A duration of the first voltage pulse is less than a duration of one switching cycle of the first self-oscillating resonant half bridge power converter, such as between 1 % and 50 % of the duration of the one switching cycle, said one switching cycle representing a switching frequency of the first self-oscillating resonant half bridge power converter in its active state.

The first self-oscillating resonant half bridge power converter may be a self-oscillating resonant class DE power converter.

The first and second controllable semiconductor switches forms an inverter stage of the half bridge power converter. Each of the first controllable semiconductor switch and the controllable second semiconductor switch may comprise a MOSFET, e.g. an NMOS transistor, or a Gallium Nitride (GaN) MOSFET or Silicon Carbide (SiC) MOSFET or IGBT. The first DC supply rail may be connected to a positive DC voltage source and the second DC supply rail may be connected to a ground plane or line of the power converter assembly or to negative DC voltage source having a potential below the ground plane.

The first voltage pulse supplied by the start-up circuit to the control input of the first controllable semiconductor switch possesses an amplitude and a length or duration to reliably initiate oscillation of the self-oscillating resonant half bridge power converter and hence switching the latter from an inactive state to an active state. According one embodiment, the first voltage pulse has an amplitude larger than a threshold voltage of the first controllable semiconductor switch - for example at least 1 V larger, or even at least 3 V larger than said threshold voltage. The threshold voltage of the first controllable semiconductor switch typically depends on type and other electrical characteristics of the semiconductor material and manufacturing technology. With respect to the length of the first voltage pulse, the start-up circuit generates the first voltage pulse with a duration less than a duration of one switching cycle of the first self-oscillating resonant half bridge power converter, such as between 1 % and 50 % of the duration of the one switching cycle. The one switching cycle is representing a switching frequency of the first self-oscillating resonant half bridge power converter in its active state. The switching frequency of the first self-oscillating resonant half bridge power converter may be determined or set by a transfer function of a feedback loop of the half bridge power converter where the feedback loop may extend from the common output node and back to the control input of the first controllable semiconductor switch and where the first gate inductor creates additional phase shift in the feedback loop to sustain self-oscillation. The feedback loop is be configured or designed to provide a switching frequency of the first self-oscillating resonant half bridge power converter at, or larger than, 1 MHz such as larger than 5 MHz such as larger than 10 MHz or even larger than 30 MHz. Using a 5 MHz switching frequency of the half bridge power converter, the duration of one switching cycle is 200 ns. Hence, in this exemplary embodiment, the duration of the first voltage pulse may lie between 2 ns and 100 ns for example between 20 ns and 100 ns.

The first and second gate inductors are magnetically coupled according to one embodiment of the power converter assembly to provide very reliable and well-controlled start-up of the self-oscillating resonant half bridge power converter. The first and second gate inductors may be magnetically coupled in opposite phase forcing substantially 180 degrees phase shift between a control voltage of the first controllable semiconductor switch and a control voltage of the second controllable semiconductor switch. The well-behaved and rapid start-up of the self-oscillating resonant half bridge power converter by utilising opposite phase magnetic coupling of the first and second gate inductors as discussed in additional detail below with reference to the drawings.

A mutual magnetic coupling coefficient between the first gate inductor and the second gate inductor is preferably larger than 0.1, or even more preferably larger than 0.4. A relatively large magnetic coupling coefficient is generally advantageous to minimize deviations from the desired 180 degrees phase difference between the respective control voltages, e.g. gate voltages, of the first and second controllable semiconductor switches. A large magnetic coupling coefficient may be achieved by winding the first gate inductor and the second gate inductor around a common magnetically permeable member or core. The respective inductances of the first and second gate inductors vary depending on requirements of particular application and the desired switching frequency of self-oscillating resonant half bridge power converter. In some embodiments of the converter assembly, the first gate inductor may have an inductance between 1 nH and 10 µH such as between 10 nH and 2 µH. The second gate inductor may have an inductance between 1 nH and 10 µH such as between 10 nH and 2 µH. The inductance of the first and second gate inductors is preferably substantially identical, i.e. nominally identical, but minor inductance deviations may naturally exist as consequence of component tolerances and drift.

The first gate inductor may be connected between a source terminal or emitter terminal of the first controllable semiconductor switch and the control input of the first controllable semiconductor switch and/or the second gate inductor may be connected between a source terminal or emitter terminal of the second controllable semiconductor switch where the latter source or emitter terminal in turn is connected to the common output node. The source or emitter terminal of the second controllable semiconductor switch may for example be connected to the common output node if the second controllable semiconductor switch comprises an n-type semiconductor device such as a NMOS transistor.

The start-up circuit may comprise a first DC voltage source connected in series with a first pulse switch for generating the first voltage pulse by selectively connecting and disconnecting a DC voltage of the first DC voltage source from the control input of the first controllable semiconductor switch as discussed in additional detail below with reference to the drawings.

Another embodiment of the start-up circuit comprises a rectifying element, e.g. a diode, connected in series with the first pulse switch for blocking reverse current flow through the first pulse switch. The reverse current flow is current flowing from the control input of the first controllable semiconductor switch into the first pulse switch or into first pulse voltage source. This embodiment is particularly useful where the first pulse switch comprises a MOS transistor where the rectifying element may block reverse current flow through an intrinsic body diode of the MOS transistor as discussed in additional detail below with reference to the drawings. The skilled person will understand that each of the first and second controllable semiconductor switches, and optionally the first pulse switch, may comprise a MOSFET, e.g. an NMOS transistor, or a Gallium Nitride (GaN) MOSFET or Silicon Carbide (SiC) MOSFET or an IGBT.

Yet another embodiment of the resonant power converter assembly comprises a resistive path connected from the common output node to the first DC supply rail to set a DC bias voltage at the common output node in an inactive state of the first self-oscillating resonant half bridge power converter. A resistance of the resistive path, at room temperature, is preferably larger than 100 kΩ or larger than 1 MΩ. The resistive path serves to energize the common output node and set its voltage potential in the inactive state of the self-oscillating resonant half bridge power converter to support reliable and rapid start-up of the power converter assembly as discussed in additional detail below with reference to the drawings.

The resistive path may comprise at least one of a resistor and an intrinsic leakage path through the second semiconductor switch. Hence, the resistive path may be formed by one or more separate electrically conductive component(s) of the assembly, e.g. resistors, or by intrinsic characteristics of the second semiconductor switch. The intrinsic leakage path is connected to the second DC supply rail and a leakage current runs through the second semiconductor switch to the common output node and can therefore be represented by an equivalent resistance.

One embodiment of the resonant power converter assembly may comprise a DC-DC converter. This DC-DC converter embodiment comprises a rectifier connected to an output of the resonant network to provide a rectified DC output voltage. The rectifier may comprise a synchronous rectification circuit or an asynchronous rectification circuit.

The power converter assembly may comprise a plurality of individual series coupled self-oscillating resonant half bridge power converters coupled between the positive and negative DC supply rails in accordance with certain embodiments of the invention. One such embodiment of the power converter assembly further comprises:
A second self-oscillating resonant half bridge power converter connected in series with the first self-oscillating resonant half bridge power converter to the second DC supply rail. The second self-oscillating resonant half bridge power converter comprising: A third controllable semiconductor switch and a fourth controllable semiconductor switch connected in series between an output of the second controllable semiconductor switch and the second DC supply rail,
a third gate inductor connected between a control input of the third controllable semiconductor switch and a second bias voltage,
a fourth gate inductor connected between a control input of the fourth controllable semiconductor switch and a common output node of the third and fourth semiconductor switches; wherein the start-up circuit is further configured to generate and inject a second voltage pulse into the control input of the third semiconductor switch to switch the third semiconductor switch from a non-conducting state to a conducting state.

The second self-oscillating resonant half bridge power converter may be a self-oscillating resonant class DE power converter.

The skilled person will understand that the third gate inductor and the fourth gate inductor may be magnetically coupled in opposite phase forcing substantially 180 degrees phase shift between respective control voltages of the third controllable semiconductor switch and the fourth controllable semiconductor switch for the same reasons as those discussed above in connection with the magnetic coupling of the first and second gate inductors.

The start-up circuit may comprise a second DC voltage source connected in series with a second pulse switch. The second pulse switch may be configured to generate second voltage pulse by selectively connecting and disconnecting a DC voltage of the second DC voltage source from the control input of the third controllable semiconductor switch of the second self-oscillating resonant half bridge power converter as discussed in additional detail below with reference to the drawings. One embodiment of the start-up circuit comprises a floating or level-shifted implementation of the second DC voltage source wherein a negative terminal of the second DC voltage source is raised to a DC voltage above the first supply rail. The negative terminal of the second DC voltage source may for example possess an electrical potential of approximately one-half of the voltage difference between the positive and negative DC supply rails. According to floating or level-shifted embodiments of the start-up circuit, a negative terminal of the second DC voltage source is connected to the output, e.g. drain or collector terminal, of the second controllable semiconductor switch. A positive terminal of the second DC voltage source is connected to the second pulse switch such that the on-state of the latter connects the DC voltage of the second DC voltage source to the control input of the third controllable semiconductor switch.

The start-up circuit may be configured to synchronize the first voltage pulse and the second voltage pulse to align on-set times, and optionally durations, of the first and second voltage pulses. This feature or features ensure a well-controlled phase relationship between resonant voltages and resonant currents of the first and second self-oscillating resonant half bridge power converters both during a start-up phase and during steady-state operation of the converters as discussed in additional detail below with reference to the drawings.

Achieving accurate time synchronization between the first voltage pulse and the second voltage pulse is particularly challenging where the second DC voltage source is level-shifted or floating from the negative DC supply rail as discussed above. This problem is solved by one embodiment of the start-up circuit which comprises a first voltage divider connected between the first DC voltage source and a first driver switch and having a first tapping node connected to the control input of the first pulse switch; and a second voltage divider connected between the second DC voltage source and a second driver switch and having a second tapping node connected to a control input of the second pulse switch. The application of separate voltage dividers, connected to respective ones of the first and second DC voltage sources of the start-up circuit may provide synchronised driving voltages at the first and second tapping nodes despite a difference in absolute voltage levels at these tapping nodes as discussed in additional detail below with reference to the drawings. The skilled person will appreciate that a particularly accurate timing between the first and second voltage pulses may be achieved if corresponding components of the first voltage divider and the second voltage divider and associated driver switch are nominally identical. Likewise, control inputs of the first and second driver switches are preferably driven by a common pulse voltage source to synchronize the excitation of the first and second voltage dividers.

A second aspect of the present invention relates to a method of switching a self-oscillating resonant half bridge power converter from an inactive state to an active state, the method comprising
- energizing an output node of an inverter stage of the resonant half bridge power converter through a resistive path to a DC supply rail,
- generating a voltage pulse of a predetermined duration and amplitude,
- applying the voltage pulse to a control input of a semiconductor switch of the inverter stage to switch the semiconductor switch from a non-conducting state to a conducting state and induce self-oscillation of a feedback loop around the inverter stage. A switching frequency of the self-oscillating resonant half bridge power converter in its active state is larger than 1 MHz. The predetermined duration of the voltage pulse is less than a duration of one switching cycle of the self-oscillating resonant half bridge power converter, such as between 1 % and 50 % of the duration of the one switching cycle, said one switching cycle representing a switching frequency of the first self-oscillating resonant half bridge power converter in its active state.

The voltage pulse may be applied directly to the control terminal of the low-side semiconductor switch without any intervening inductor or capacitor. The skilled person will understand that the term "directly applied" encompasses the existence of parasitic resistance and inductance associated with electrical wiring between the control terminal of the low-side semiconductor switch and a pulse voltage source supplying the voltage pulse.

### BRIEF DESCRIPTION OF THE DRAWINGS

A preferred embodiment of the invention will be described in more detail in connection with the appended drawings, in which:
FIG. 1 shows an electrical circuit diagram of a power converter assembly in accordance with a first embodiment of the invention,
FIG. 2 upper diagram is an electrical circuit diagram of a power converter assembly in accordance with a second embodiment of the invention,

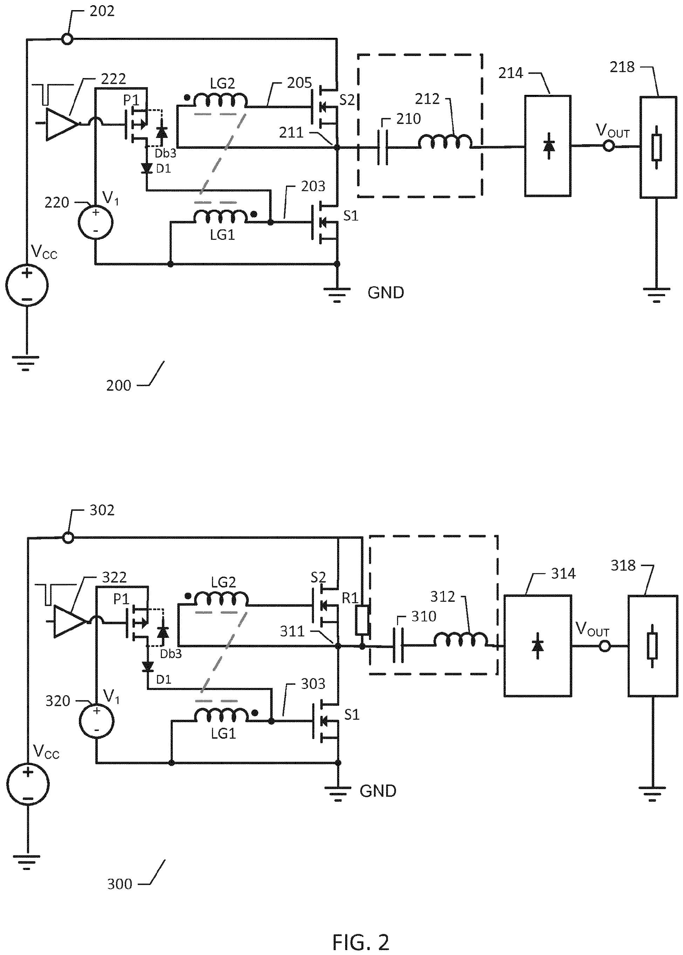

FIG. 2 lower diagram is an electrical circuit diagram of a power converter assembly comprising an output node bias path in accordance with a third embodiment of the invention,

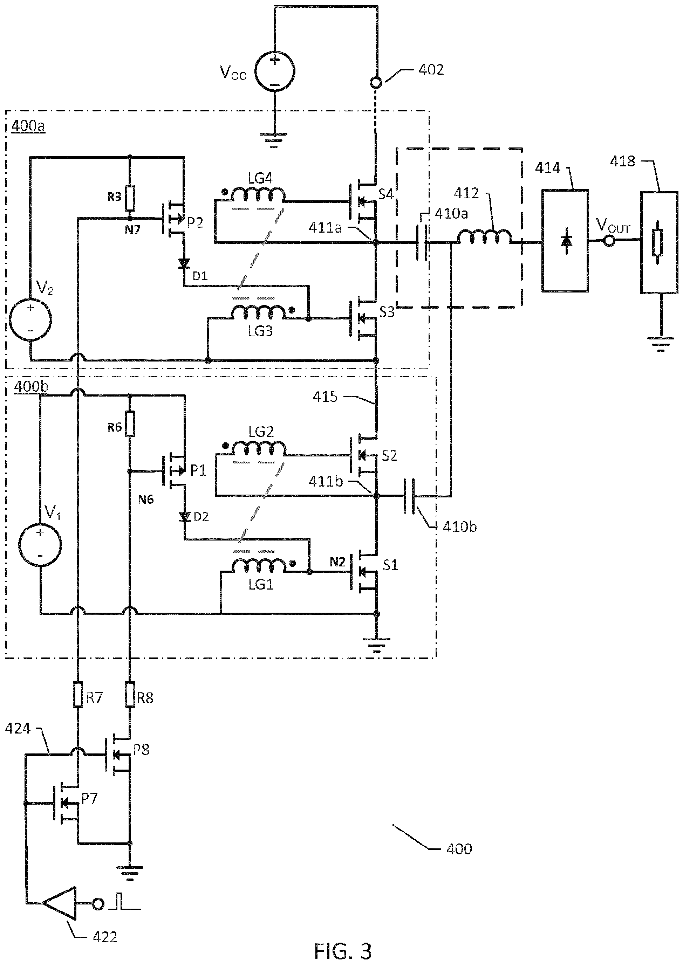

FIG. 3 is an electrical circuit diagram of a power converter assembly comprising a plurality of stacked individual half bridge resonant power converters in accordance with a fourth embodiment of the invention,

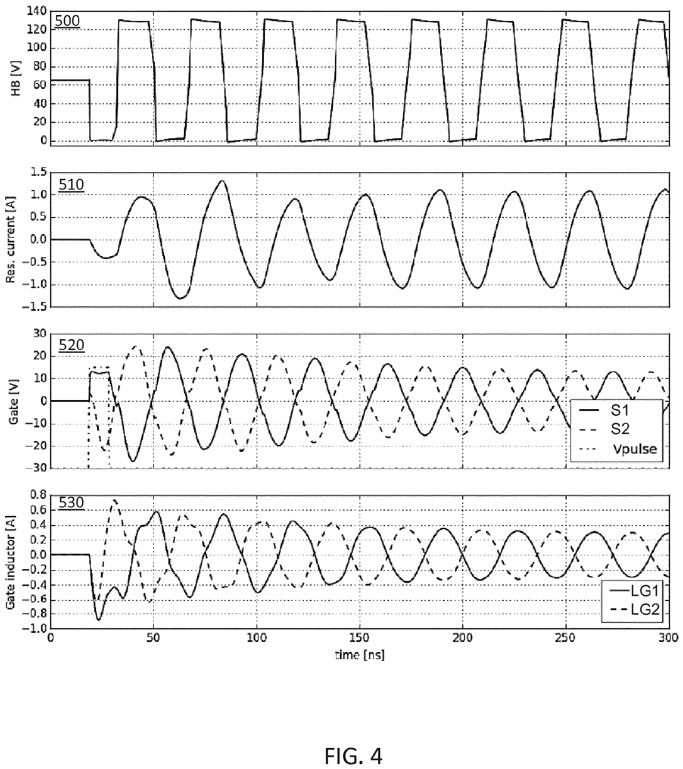

FIG. 4 shows a series of plots depicting various simulated voltage and current waveforms of the power converter assembly in accordance with the first embodiment during start-up.

### DETAILED DESCRIPTION OF PREFERRED EMBODIMENTS

In the following, various exemplary embodiments of the present power converter assembly are described with reference to the appended drawings. The skilled person will understand that the accompanying drawings are schematic and simplified for clarity and therefore merely show details which are essential to the understanding of the invention, while other details have been left out. Like reference numerals refer to like elements or components throughout. Like elements or components will therefore not necessarily be described in detail with respect to each figure. It will further be appreciated that certain actions and/or steps may be described or depicted in a particular order of occurrence while those skilled in the art will understand that such specificity with respect to sequence is not actually required.

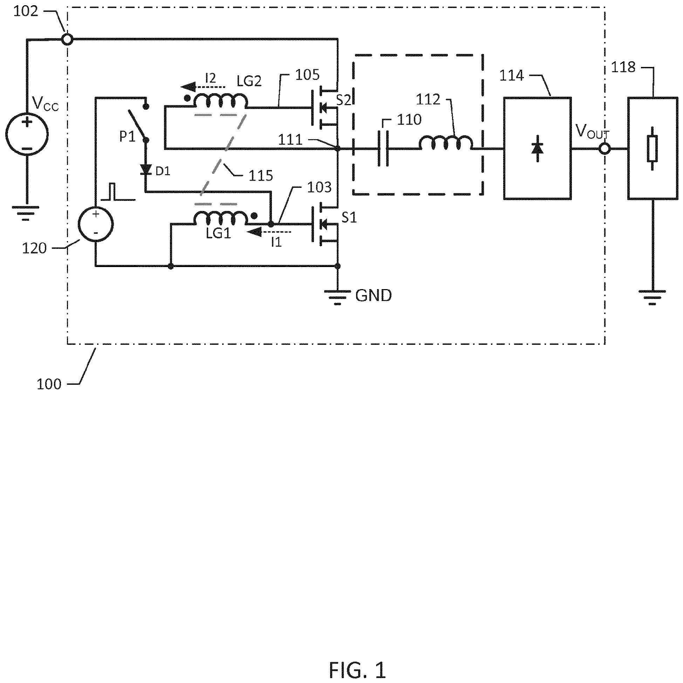

FIG. 1 is a simplified electrical circuit diagram of a power converter assembly 100 in accordance with a first embodiment of the invention. The present power converter assembly 100 comprises a single or first self-oscillating resonant half bridge power converter or inverter, in the illustrated example a self-oscillating resonant class DE power converter or inverter, connected to a rectification circuit 114 for producing a DC output voltage V_{OUT} across a schematically illustrated load resistor or impedance 118. The load 118 may generally exhibit inductive, capacitive or resistive impedance. The skilled person will understand that alternative embodiments of the power converter assembly may comprise a multiple of individual interconnected self-oscillating resonant class DE power converters or inverters as discussed below in additional detail. The present self-oscillating resonant class DE power converter is particularly well-adapted for operation at very high switching frequencies such as frequencies above 1 MHz, or above 10 MHz or even higher in the VHF frequency range above 30 MHz due to, amongst other factors, low switching losses in connection with the operation of a feedback loop of the first self-oscillating resonant class DE power converter as explained in further detail below.

The power converter assembly 100 is energized by a DC supply voltage source V_{CC} via a supply terminal 102 of the assembly. The voltage level of the DC supply voltage source V_{CC} may vary considerably according to requirements of any particular conversion application and may for example lie between 1 V and 500 V for example between 10 V and 230 V. The DC supply voltage source V_{CC} is connected to a drain terminal of a high-side NMOS transistor S2 of an inverter stage of the self-oscillating resonant class DE power converter or DE power converter. The source terminal of a low-side NMOS transistor S1 of the inverter stage is connected to ground GND of the assembly 100. Hence, the ground node forms a first DC supply rail of the DE power converter and the drain terminal of the high-side NMOS transistor S2 forms a second DC supply rail of the DE power converter. The low-side and high-side NMOS transistors S1, S2, respectively, are connected in cascade or series between the first and second DC supply rails with a common output node 111 arranged in-between the first and second semiconductor switches. This common output node 111 comprises the drain terminal of the low-side NMOS transistor S1 and a source terminal of the high-side NMOS transistor S2. The common output node 111 is coupled to a first or input side of a series resonant network comprising at least a resonant capacitor 110 and resonant inductor 112. The resonant output voltage of the series resonant network is applied to an input of the rectification circuit 114. The skilled person will understand that the low-side NMOS transistor S1 and high-side NMOS transistor S2 in practice may be formed by a plurality of parallel separate NMOS transistors e.g. to distribute operational currents between multiple devices. The skilled person will also understand that one or both of the low-side NMOS transistor S1 and high-side NMOS transistor S2 may be replaced by different types of semiconductor switches in alternative embodiments of the DE power converter such as a DMOS or IGBT devices etc. One or both of the low-side NMOS transistor S1 and high-side NMOS transistor S2 may comprise an IRF5802 power MOSFET available from the manufacturer International Rectifier. The respective gate terminals of the low-side NMOS transistor S1 and high-side NMOS transistor S2 are control inputs of the NMOS transistors allowing the latter to be switched between a conducting state or on-state with low resistance between the drain and source terminals and a non-conducting state or off-state exhibiting very large resistance between the drain and source terminals.

The class DE resonant power converter furthermore includes the above-mentioned feedback loop (not shown) comprising a feedback path from the output, i.e. the drain terminal of transistor S1 connected to the common output node 111, to the gate terminal 103 or input of the low-side NMOS transistor S1. Characteristics of the transfer function of the feedback loop determine the oscillation frequency, and therefore switching frequency, of the class DE resonant power converter and the power converter assembly. The feedback loop may comprise different components depending on characteristics of the low-side and high-side NMOS transistors S1, S2 and the gate inductors LG1 and LG2. In some embodiments, the feedback loop may include an intrinsic gate-drain capacitance of the NMOS transistor switch S1 and the first gate inductor LG1. The feedback loop may include a separate capacitor connected between the drain terminal 111 and gate terminal 103 of the low-side NMOS transistor S1. The gate inductor may comprise a substantially fixed inductance as discussed above. The gate inductor LG1 is coupled or connected in-between the ground potential GND and the gate terminal of the transistor switch S1. In other embodiments, the distant end of the gate inductor LG1 may be connected to a variable bias voltage instead of the ground potential. The PCT publication WO 2014/067915 discloses various variable bias voltage sources for the latter purpose. The gate inductor LG2 is coupled or connected in-between the common output node 111 and the gate terminal of the NMOS transistor switch S2. Inductances of the gate inductors LG1 and LG2 may be substantially identical in some embodiments of the invention. The inductance of each of the gate inductors LG1 and LG2 may lie between 20 nH and 100 nH if the desired switching frequency is set to about 30 MHz as discussed below.

The self-oscillation loop extending from the common output node 111, i.e. also the drain terminal of the NMOS transistor S1 as discussed before, to the gate terminal of S1 ensures that each of the semiconductor switches S1 and S2 is alternatingly switched between conducting and non-conducting states. In addition, the semiconductor switches S1 and S2 operates in opposite phase and with a non-overlapping switching scheme. Due to the switching action of the semiconductor switches S1 and S2, the voltage at the common output node 111 alternates between the DC supply voltage V_{CC} and ground potential GND at the switching frequency or oscillation frequency of the DE power converter. The common output node 111 is therefore alternatingly connected to the DC supply voltage V_{CC} and to ground potential GND by the respective low-resistance paths, i.e. conducting paths, through the semiconductor switches S1 and S2.

The output voltage of the power converter assembly 100 supplied at an output node or terminal V_{OUT} can be controlled by various control schemes and circuitry (not shown) of the resonant power converter. For example using the previously discussed burst-mode modulation or control where the DE power converter is switched between active and inactive states at certain modulation frequency. The modulation frequency for burst-mode control is typically much lower than the switching frequency of the class DE resonant power converter 100, e.g. one hundred times lower or thousand times lower.

The class DE resonant power converter furthermore comprises a resonant network connected to the common output node 111 for excitation by the resonant voltage and current supplied at the common output node 111. The resonant network comprises a resonant series capacitor 110 and resonant series inductor 112. The common output node 111 is coupled to a first or input side of the series resonant network and an output side of the resonant network is connected to a rectifier 114. The output of the rectifier 114 generates the DC output voltage of the converter. Various types of synchronous or asynchronous rectification circuits may be utilized. The skilled person will appreciate that the resonant network is schematically illustrated and may comprise additional capacitive and inductive components for example intrinsic drain-source capacitances of the semiconductor switches S1 and S2. The resonance frequency of the resonant network may be located approximately at the switching frequency of the class DE resonant power converter or slightly higher or lower.

The class DE resonant power converter furthermore comprises a start-up circuit that is configured to inject a voltage pulse or current pulse of certain, preferably welldefined duration and amplitude, into the gate input 103 of the low-side semiconductor switch S1. The start-up circuit comprises a DC voltage source 120, a controllable pulse switch P1 and an optional rectifying element e.g. a diode D1. The voltage pulse or current pulse supplied by the start-up circuit switches the class DE resonant power converter from an inactive state to the active state. In the inactive state, both of the semiconductor switches S1 and S2 are simultaneously off or non-conducting and the voltage at the common output node 111 remains essentially constant due to the lacking switching activity. In the active state of the class DE resonant power converter, each of the semiconductor switches S1 and S2 are switching, in opposite phase, at the switching frequency or oscillation frequency determined by the frequency response characteristics of the feedback loop such that the voltage at the common output node 111 alternatingly switches between the V_{CC} and GND as discussed before.

When the class DE resonant power converter resides in the inactive state, the voltage pulse or current pulse injected into the gate terminal 103 switches the low-side semiconductor switch S1 from its non-conducting state to its conducting state which in turn discharges the common output node 111 and starts a flow of current through S1. This transient event energizes internal circuit nodes and activates the signal feedback through the previously discussed feedback path around low-side semiconductor switch S1. Consequently, the class DE resonant power converter is switched to the active state. The optional diode D1 is arranged in series with the output of the DC voltage source 120 and switch P1 for blocking reverse current flow through the DC voltage source from the gate input 103 of the first/low-side semiconductor switch S1 into the first DC voltage source when the self-oscillating feedback loop is running or oscillating, i.e. the active state of the class DE resonant power converter. Under the latter conditions, the skilled person will appreciate that the voltage at the gate input 103 oscillates at large amplitude and periodically falling well below the negative DC supply rail, GND, and rises well above the positive DC supply rail, of 120, as discussed in further detail below with reference to the simulated voltage waveform plots on FIG. 4. The amplitude of the voltage pulse supplied by the pulse voltage source 120, P1 must be sufficiently large to turn-on the low-side semiconductor switch S1. If the low-side semiconductor switch S1 is an NMOS, this requirement means that the amplitude of the voltage pulse should be higher than a threshold voltage of S1 - for example at 1 V, or 3 V, or 5 V higher. The skilled person will appreciate that corresponding requirements apply for other types of semiconductor switch devices for example IGBT devices such as a Gallium Nitride (GaN) or Silicon Carbide (SiC) MOSFETs.

The amplitude of the voltage pulse may be set to a value between 3 V and 30 V in a number of exemplary embodiments of the class DE resonant power converter depending *inter alia* of the characteristics of the low-side semiconductor switch S1.

The duration or length of the voltage pulse supplied by the start-up circuit may lie between 1 % and 100 % of a switching cycle (i.e. the reciprocal of the switching frequency) of the class DE resonant power converter. According to the invention, the duration or length of the voltage pulse supplied by the start-up circuit is less than the duration of one switching cycle. In some embodiments, the duration of the voltage pulse may lie between 10 % and 50 %, such as between 20 % and 30 %, of the switching cycle since this range allows the start-up pulse to excite the S1 and S2 switch devices at the natural self-oscillating frequency of class DE resonant power converter.

The duration of the voltage pulse supplied by the start-up circuit may be determined by controlling duration of an on-time of the pulse switch P1 while the amplitude of the DC voltage source 120 may remain essentially fixed. When the switch P1 is switched back to its non-conducting/off state, the DC voltage source 120 is effectively disconnected from the gate input 103 of S1 and thus terminating the voltage pulse. The pulse switch P1 may comprise a semiconductor switch for example an NMOS and/or PMOS transistor(s).

The voltage pulse is injected directly into the gate input 103 of the low-side semiconductor switch S1 and not through the gate inductor L1. This direct application of the voltage pulse leads to a rapid and initialisation process of the class DE resonant power converter where internal state variables are rapidly forced to their intended operating conditions. This advantage is particularly pronounced in embodiments where the first and second gate inductors LG1, LG2 are mutually magnetically coupled in opposite phase. Such an embodiment is schematically illustrated on the drawing by the magnetic coupling symbol 115, with the reversed orientation of "dotted" ends of the gate inductors LG1 and LG2. The magnetic coupling of the first and second gate inductors LG1, LG2 may be achieved by winding these around a common magnetically permeable member or core. The mutual magnetic coupling coefficient between the first and second gate inductors LG1, LG2 may vary depending on application specific requirements and various practical constraints. In some embodiments, the mutual magnetic coupling coefficient may be larger than 0.1, or even more preferably larger than 0.4. The opposite phase coupling of LG1 and LG2 induces or forces substantially 180 degrees phase shift between the gate control voltages of the high-side and low-side semiconductor switches S2, S1. This has the effect that the application of the (positive) voltage pulse to the first gate input 103 starts a flow of current through the first gate inductor LG1 in the direction indicated by inductor current 11. In response, a corresponding inductor current, in a direction indicated by inductor current I2, is drawn out of the gate input or terminal 105 of S2 due to the magnetic coupling of the first and second gate inductors LG1, LG2. This discharges the gate input 105 of S2 and pulls the gate voltage down below the floating potential 111/source of S2, such that S2 is turned off, due to the NMOS polarity of S2, as the voltage pulse is supplied to the gate input 103 of S1. At the same time, S1 is turned-on, i.e. switched to its conducting state initiating the self-oscillation of the class DE resonant power converter. Hence, the action of the first and second gate inductors LG1, LG2 ensures rapid and smooth start-up of the class DE resonant power converter by immediately forcing the low-side and high-side NMOS transistors S1, S2 into their appropriate and opposite switch states. In particular, the action of the first and second gate inductors LG1, LG2 prevents simultaneous conducting states of the low-side and high-side NMOS transistors S1, S2 which would lead to detrimental shoot-through currents between the DC supply rails with the risk of prolonging start-up of the Class DE power converter and introduce erroneous system states for example inducing increased power consumption and in general is a much more disruptive start-up that can lead to failure.

While it is often advantageous to provide the above-discussed magnetic coupling between the first and second gate inductors LG1, LG2 to minimize the start-up time of the class DE resonant power converter, the skilled person will understand that the magnetic coupling between the first and second gate inductors LG1, LG2 may be absent in alternative embodiments of the class DE resonant power converter. As the start-up pulse applied to the low-side semiconductor switch S1 still excites the total system enough, assuming that the common/floating node 111 is at a sufficiently high potential so it possess energy to excite the system, to build up a resonance around S2 and in LG2, through the feedback of S2. However, this is a much slower start-up and build-up of the resonance, making it less robust compared to the coupled case.

Furthermore, while the distant end of the first gate inductor LG1 is fixedly connected to the negative supply raid GND in the present class DE resonant power converter embodiment, the skilled person will appreciate that this distant end of the first gate inductor LG1 may be coupled to a fixed or variable DC bias voltage in alternative embodiments, the same applies to LG2. The latter embodiment may be used to control a duty cycle of the low-side semiconductor switch S1 and therewith control the output voltage and output power of the class DE resonant power converter using the control mechanisms and circuits described in PCT publication WO 2014/067915.

The upper diagram of FIG. 2 shows a simplified electric circuit diagram of a power converter assembly 200 in accordance with a second embodiment of the invention. This power converter assembly 200 also comprises a merely single self-oscillating resonant class DE power converter or inverter like the previously discussed embodiment. The single self-oscillating resonant class DE power may be identical to the previously discussed self-oscillating resonant class DE power. A start-up circuit of the power converter assembly 200 comprises a fixed DC voltage source 220, a controllable PMOS P1, an optional gate driver 222, e.g. inverter, and a rectifying element D1, e.g. a diode. The voltage pulse or current pulse supplied by the start-up circuit switches the class DE resonant power converter from its inactive state to its active state as discussed above. The start-up circuit operates largely as the previously discussed start-up circuit where a duration of the voltage pulse supplied by the start-up circuit is determined by controlling an on-time of the PMOS pulse switch P1 while keeping the voltage V₁ of a DC voltage source 220 essentially fixed. The state switching of the PMOS switch P1 is controlled by the pulse voltage applied to a gate input of P1 by the control signal suppled through the optional buffer 222. The schematically depicted negative-going pulse applied to the gate input of P1 switches temporarily, for the duration of the pulse, P1 to its conducting state/on-state due to the polarity of PMOS switch P1 and connects the voltage V₁ of the DC voltage source 220 to the gate input 203 of a low-side semiconductor switch S1 to turn-on the latter device and initiate self-oscillation of the converter assembly in a manner as described in the previously discussed embodiment. Hence, the controllable PMOS P1 functions as a pulse switch. The DC voltage source 220 is effectively disconnected from the gate input 203 of S1 when the PMOS pulse switch P1 is switched back to its non-conducting/off state which terminates the voltage pulse at the control input 203.

The optional diode D1 is arranged in series with the output of the PMOS switch P1 for blocking reverse current flow through an intrinsic body diode Db3 of the PMOS switch P1 in the active state, i.e. self-oscillating state, of the class DE resonant power converter. Under the latter conditions, the skilled person will appreciate that the gate voltage at the gate input 203 may oscillate at large amplitude and therefore periodically exceed the DC voltage level of the DC voltage source 220. This condition will potentially induce an undesired flow of reverse current from the gate input node 203 through Db3 unless precautionary measures are taken. Hence, the orientation of the diode D1 blocks this reverse flow of current into the intrinsic body diode Db3.

The lower diagram of FIG. 2 shows a simplified electric circuit diagram of a power converter assembly 300 in accordance with a third embodiment of the invention. This power converter assembly 300 also comprises merely a single self-oscillating resonant class DE power converter or inverter like the two previously discussed embodiments. The single self-oscillating resonant class DE power may be identical to the previously discussed self-oscillating resonant class DE power except for the addition of a pull-up resistor R1. The pull-up resistor R1 is connected between a common output node 311 of the inverter stage, formed by the interconnect node between the low-side and high-side NMOS transistors S1, S2, respectively, and a positive DC supply voltage V_{CC}. The power converter assembly 300 also comprises a start-up circuit which may be identical to one of the previously discussed start-up circuits of the first and second embodiments of the power converter assembly 100, 200. The pull-up resistor R1 forms a resistive path from the positive DC supply voltage V_{CC} to the common output node 311 such that the latter is held at a desired DC potential, higher than the negative DC supply voltage, e.g. GND, in an inactive state of the self-oscillating resonant class DE power converter. The skilled person will appreciate that the low-side and high-side NMOS transistors S1, S2 are non-conducting in the inactive state of the converter and the common output node 311 therefore may be floating without any noticeable energy and without any welldefined voltage potential. The resistive path, provided by the pull-up resistor R1, from the common output node 311 to the positive DC supply voltage rail energizes the common output node 311 and sets its potential before start-up of the power converter assembly 300. The use of a resistor instead of an inductor (which likewise passes DC current) to energize the common output node 311 minimizes the component space and costs of the assembly 300. Experiments carried out by the inventors suggest that a resistance of the pull-up resistor R1 may be selected such that the DC voltage at the common output node 311, when the converter is in its inactive state before start-up, may lie between 5 % and 100 %, such as between 50 % and 100 %, of the voltage of the positive DC supply voltage source V_{CC}. For some embodiments of the power converter assembly 300, the latter resistance requirement suggests a 100 kΩ or larger resistance of the pull-up resistor R1. The resistance of the of the pull-up resistor R1 may be selected such that a bias current flowing therein is the same or larger than a sum of parasitic leakage currents running through the low-side and high-side NMOS transistors S1, S2. The latter constraint ensures that the resistance of the pull-up resistor R1 is sufficiently large to place the DC potential of the common output node 311 within the above-mentioned voltage range, i.e. between 5 % and 100 % of the voltage of the positive DC supply voltage source V_{CC}.

The skilled person will understand that the resistive path from the positive DC supply voltage source V_{CC} to the common output node 311 in alternative embodiments of the converter assembly 300 may be implemented by a resistive leakage path of the high-side NMOS transistor S2 by careful semiconductor layout of S2. Hence, the pull-up resistor R1 can be eliminated leading to a more compact layout of the assembly 300.

FIG. 3 shows a schematic electrical circuit diagram of a power converter assembly 400 comprising a plurality of stacked individual class DE resonant power converters in accordance with a fourth embodiment of the invention. While the schematic electrical circuit diagram merely illustrates a first self-oscillating resonant class DE power converter, comprising low-side and high-side semiconductor switches S1, S2 and a second self-oscillating resonant class DE power converter, comprising low-side and high-side semiconductor switches S3, S4, respectively, the skilled person will understanding that the power converter assembly 400 may comprise one or more additional, and preferably identical, self-oscillating resonant class DE power converter(s) stacked on top of the second oscillating resonant class DE power converter. Each of the semiconductor switches S1, S2, S3 and S4 may comprise a NMOS transistor or a PMOS transistor. The power converter assembly 400 may be configured to divide a DC voltage difference between the positive and negative DC supply rails substantially equally between the plurality of stacked individual class DE resonant power converters such that voltage handling requirements of passive and active components, in particular of the semiconductor switches S1, S2, S3 and S4, are markedly reduced. In the latter embodiments, the start-up circuit may be adapted to provide well-controlled start-up of the plurality of stacked self-oscillating resonant class DE power converter(s) by synchronizing the respective voltage pulses applied to the low-side semiconductor switches of the self-oscillating resonant class DE power converter(s) as discussed in further detail below.

The second self-oscillating resonant class DE power converter 400a of the present power converter assembly 400 is connected in series with the first self-oscillating resonant class DE power converter 400b to the positive DC voltage source V_{CC} through a positive DC supply rail or terminal 402 of the assembly 400. The second self-oscillating resonant class DE power converter 400a comprises a third controllable semiconductor switch S3 connected in series with fourth controllable semiconductor switch S4. The third and fourth controllable semiconductor switches S3, S4 have respective gate inputs for state switching control as discussed above in connection with the first self-oscillating resonant class DE power converter 400b. A source terminal of switch S3 is connected to an output, i.e. drain terminal, of the second controllable semiconductor switch S2 of the first oscillating resonant class DE power converter at node 415 such that the respective inverter stages S1, S2 and S3, S4 are connected in series between GND and the positive DC supply rail. The second self-oscillating resonant class DE power converter 400a comprises a third gate inductor LG3 connected between the control input of S3 and a second bias voltage which is at the output node 415 in the present embodiment. The skilled person will understand that a DC voltage at this node 415 may be an essential fixed DC voltage corresponding to approximately one-half of the voltage difference between the positive and negative DC supply rails due to DC voltage division between the series connected input side circuitry of the first and second self-oscillating resonant class DE power converters 400b, 400a.

The second class DE power converter 400a further comprises a fourth gate inductor LG4 connected between the control input, e.g. gate terminal, of S4 and a common output node 411a of S3 and S4. The third and fourth gate inductors LG3, LG4 are preferably mutually magnetically coupled in opposite phase forcing substantially 180 degrees phase shift between the control voltages, e.g. gate voltages, of the third and fourth controllable semiconductor switches S3, S4 for similar reasons to those discussed above in connection with the first and second controllable semiconductor switches S1, S2 of the power converter assembly 100. The resonant network of the assembly 400 is partly shared between the first and second class DE power converters 400b, 400a and comprises individual resonant capacitors 410b, 410a connected to respective ones of the common output nodes 411a, 411b and a shared resonant inductor 412 connected to both of the resonant capacitors 410b, 410a. The individual resonant capacitors 410b, 410a also ensure that the two common output nodes 411a, 411b are DC isolated from each other such that the different DC voltage levels at these output nodes, as discussed below, during operation of the converter assembly is inconsequential. The skilled person will understand that other embodiments of the converter assembly 400 may comprise separate resonant networks with outputs which are connected in parallel to an input of a rectification circuit 414. The output of the rectification circuit 414 may be a DC output voltage V_{OUT} of the power converter assembly 400 and may be connected to a load circuit or device 418. Electrical and/or physical characteristics of corresponding components of the first and second class DE power converter 400b, 400a may be identical and similar to the corresponding components of the DE power converter assembly 100 discussed previously.

The skilled person will understand that internal node voltages of the second class DE power converter 400a are raised to a level above the lower DC supply rail, e.g. GND in the present embodiment, and special precautionary measure is preferably taken to ensure that AC signal voltages and currents are appropriately synchronized between the first and second class DE power converter 400b, 400a despite differences between DC voltage levels at corresponding circuit nodes.

The start-up circuit of the power converter assembly 400 comprises a first section which generates a first voltage pulse for the low-side switch S1 of the first class DE power converter 400b and a second section which generates a corresponding, i.e. second, voltage pulse for the low-side switch S3 of the second class DE power converter 400a. The present embodiment of the start-up circuit is furthermore configured to synchronize the first voltage pulse and the second voltage pulse to align onset times, and optionally durations, of the first and second voltage pulses. This feature is advantageous because the synchronous property of the first voltage pulse and the second voltage pulse ensures that an appropriate and well-controlled phase relationship between resonant voltages and resonant currents of the first and second class DE power converter 400b, 400a in their active states, i.e. self-oscillating states. The same considerations naturally apply for any additional class DE power converters of the power converter assembly 400. A lack of a proper synchronization mechanism during the start-up phase may lead to failed activation of the first and second class DE power converters 400b, 400a or activation in an abnormal, potential destructive, operational state where the first and second class DE power converter 400b, 400a are running out of phase or running in a higher harmonic mode of the power converter assembly 400.

The first section of the start-up circuit comprises a first DC voltage source V₁, a controllable pulse switch P1, e.g. a PMOS as illustrated, and an optional rectifying element e.g. a diode D2 that largely operates as previously discussed in connection with the start-up circuit of the power converter assembly 100. However, the control signal for the controllable pulse switch P1 is derived from a tapping node N6 of a voltage divider, e.g. resistive voltage divider, comprising resistors R8 and R6. The voltage divider is connected between V₁ and GND through a first driver switch P8, which may comprise a NMOS or a bipolar transistor. The first driver switch P8 is driven by a suitable signal source through buffer 422 connected to the control input of P8 to switch the latter between an on-state and off-state. In the off-state of P8, the resistor R8 is disconnected from GND and the tapping node N6 is pulled-up to a DC voltage approximately corresponding to the DC voltage of the first DC voltage source V₁ by the pull-up action of the divider resistor R6 such that controllable pulse switch P1 is off or non-conducting. The low-side controllable switch S1 of the first class DE power converter 400b is thereby held in its off-state due to the DC connection to GND via LG1 of the control input/gate terminal N2 of S1. In the on-state of P8, the resistor R8 is connected to GND and the tapping node N6 pulled-down to a DC voltage at least one threshold voltage below the voltage of first DC voltage source V₁ such that controllable pulse switch P1 is switched on. Thereby, generating the first voltage pulse at the control input of the low-side controllable switch S1 to turn-on/activate the first class DE power converter 400b in a similar manner to the one previously discussed in connection with the start-up circuit of the power converter assembly 100.

The second section of the start-up circuit comprises a second DC voltage source V₂, a second controllable pulse switch P2, e.g. a PMOS as illustrated, and an optional rectifying element e.g. a diode D1 that in conjunction largely operates in a corresponding manner to the first section of the start-up circuit described above. A control signal for the controllable pulse switch P2 is derived from a tapping node N7 of a second voltage divider, e.g. resistive voltage divider, comprising divider resistors R3 and R7. The second voltage divider is connected between V₂ and GND through a second driver switch P7 which may comprise a NMOS or a bipolar transistor. The gate input of the second driver switch P7 is driven by the output of same signal source and buffer 422 as P8 such that first and second driver switches P8, P7 are switched synchronously between on-states and off-states. In the off-state of P7, the divider resistor R7 is disconnected from GND and the tapping node N7 pulled-up to a DC voltage approximately corresponding to the DC voltage of the second DC voltage source V₂ by the pull-up action of the divider resistor R3 such that controllable pulse switch P2, being an NMOS transistor is the present embodiment, is off or non-conducting. The low-side controllable switch S3 of the second class DE power converter 400a is thereby held in its off-state due to the DC connection of the control input/gate terminal and source terminal of S3 via LG3. The on-state of P7 connects the divider resistor R7 to GND and the tapping node N7 is accordingly pulled-down to a DC voltage at least one threshold voltage below the DC voltage of the second DC voltage source V₂ such that controllable pulse switch P2 is turned on and thereby generating the second voltage pulse at the control input, i.e. the gate terminal in the present embodiment, of the controllable switch S3 to turn-on/activate the second class DE power converter 400a.

The application of separate voltage dividers, connected to respective ones of the first and second DC voltage sources, of the first and second sections of the start-up circuit provides synchronised driving voltage waveforms at the tapping nodes N7, N8 despite that the difference in absolute voltage levels at these tapping nodes caused by the floating nature of the second DC voltage source V₂. The stacked coupling of the first and second class DE power converters 400b, 400a between the positive and negative DC supply rails causes these to operate at different DC voltage levels. The synchronised driving voltage waveforms at the tapping nodes N7, N8 leads to a corresponding synchronization of the first and second voltage pulses applied to the controllable switches S1 and S3 of the first and second class DE power converters 400b, 400a, respectively, to provide synchronized activation, and possibly de-activation, of the latter. The skilled person will appreciate that a particularly tight timing between the first and second voltage pulses may be achieved if corresponding components such as the first and second driver switches P8, P7 etc. of the first and second sections of the start-up circuit are nominally identical. Likewise, the DC voltage of the first DC voltage source V₁ is preferably substantially equal to the DC voltage of the second DC voltage source V₂ such that the amplitudes of the first and second voltage pulses are substantially identical despite being at different DC levels relative to the negative supply rail, GND. A resistance of each of the divider resistors R3 and R6 may be relatively small e.g. less than 5 kΩ or less than 1 kΩ. Resistance of the divider resistors R7 and R8 may be selected such as the respective drive voltages at tapping nodes N7, N8 are low enough to turn on P1 and P2. The divider resistor R8 may be eliminated, i.e. replaced by a short circuit/wire, in some embodiments of the start-up circuit.

FIG. 4 shows a series of plots 500, 510, 520 and 530 depicting various simulated voltage and current waveforms of the power converter assembly 100 during start-up. Plot 520 shows respective gate voltage waveforms at the gate inputs 103, 105 of the low-side and high-side NMOS transistors S1, S2, respectively, during start-up of the converter assembly 100 depicted on FIG. 1. The x-axis shows time in nanoseconds ns. The switching frequency of the converter assembly is approximately 30 MHz as evidenced by a switching cycle period of about 35 ns of the output voltage waveform HB(V) of plot 500.

The converter assembly 100 resides in the inactive state at t=0 and to switch the assembly to its active, self-oscillating, state, a voltage pulse is applied at t= 20 ns to the gate input 103 of the low-side NMOS transistor S1 by the voltage pulse source of the start-up circuit. The voltage pulse amplitude is approximately 12 V and a duration of about 10 ns as evident from the dotted voltage pulse waveform Vpulse of plot 520. In response, the gate-source voltage of the gate input 103 of the low-side NMOS transistor S1 rises as forced by the voltage pulse waveform while the gate-source voltage at the gate input 105 of the high-side NMOS transistor S2 immediately starts to rapidly decrease and falling below the common node 111. The decreasing gate voltage of S2 is caused by the previously-discussed inductor current I2 (refer to FIG. 1) is drawn out of the gate input or terminal 105 of S2 due to the magnetic coupling of the first and second gate inductors LG1, LG2. The corresponding currents running in the gate inductors LG1 and LG2 are depicted on plot 530 where a negative current indicates that the current is running out of the gate input 103, 105 in question. It is evident that immediately after pulse onset at t= 20 ns, both gate inductors currents are negative because the current direction through LG1 is forced by the polarity of the applied voltage pulse and the current through LG2 is governed by the opposite polarity magnetic coupling of LG1 and LG2 as discussed above. The decreasing gate-source voltage of the high-side NMOS transistor S2 is desirable, because it turns S2 off while the voltage pulse on the gate input 103 of the low-side NMOS transistor S1 simultaneously turns S1 on, i.e. conducting state, such that the opposite states of S1 and S2 are immediately forced in response to the start-up voltage pulse. The plot 500 shows the resulting voltage waveform HB(V) at the common output node 111. The DC voltage at the common output node 111 is initially pulled-up to about 60 V, which is about 50 % of the positive DC supply voltage, before t=20 ns where the voltage pulse of the start-up circuit is applied. This DC voltage potential may be caused by the action of the previously discussed pull-up resistor R1 connected to the positive DC supply rail V_{CC}. When the voltage pulse is applied at t=20 ns, the voltage at the common output node 111 is pulled down to GND by the conducing state of the low-side NMOS transistor S1. Plot 510 shows the corresponding resonant current flowing through the resonant network of the assembly (refer to FIG. 1) resulting in the voltage waveform HB(V) at the common output node 111. The resulting voltage waveform at the common output node 111 is depicted on graph/plot 500 illustrating how the voltage at common output node 111 initially is pulled down to approximately zero volt, GND, by the conducting state of S1 and subsequently pulled up to the 120 V DC level of the positive DC supply voltage source V_{CC}. In response to termination of the voltage pulse, on plot 520, the start-up circuit transits to a high-impedance state or mode by switching P1 to its off-state and thereby releasing the gate voltage of S1 which is now unforced. The gate voltage of S1 in response drops rapidly at about t= 30 ns because of the direction of the inductor current I1 and the gate voltage drops below 0 V at around t=35 ns. The gate-source voltage of S2 rises rapidly after the termination of the voltage pulse and crosses 0 V at around t=35 ns in nearly opposite phase to the gate-source voltage of S1. S2 is turned-on when the gate-source voltage of S2 reaches the threshold voltage of S2. Furthermore, since the gate-source voltage of S1 at this time instantly is below 0 V, S1 is turned off. Consequently, the resulting voltage, HB(V), at the common output node 111 is pulled to the positive DC supply rail V_{cc} possessing a DC voltage of about 130 V as evident from plot 500.

Overall, the start-up circuit ensures a rapid and smooth start-up of any of the previously discussed power converter assemblies 100, 200, 300, 400 by immediately forcing the low-side and high-side NMOS transistors, e.g.S1and S2 or S3 and S4, into their appropriate opposite phase switch states. This feature is for example evidenced by the smooth and rapid establishment of the desired opposite phase gate-source voltages at the low-side and high-side NMOS transistors S1, S2 on plot 520. Well-controlled gate-source voltages and resonant output voltage, indicating steady state operation, are established merely two or three switching cycles after the onset of the voltage pulse, which means that the present power converter assemblies can be turned-on very rapidly, in a well-controlled manner, at very low energy consumption. These properties are enabling efficient burst-mode control or regulation of the output voltage of the resonant power converter assembly.

## Claims

1. A power converter assembly (100) comprising:
a first self-oscillating resonant half bridge power converter comprising:
a first controllable semiconductor switch (S1) and a second controllable semiconductor switch (S2) connected in series between a first DC supply rail (V_{cc}) and a second DC supply rail (GND),
a first gate inductor (LG1) connected between a control input (103) of the first controllable semiconductor switch (S1) and a first bias voltage, such as the first DC supply rail,
a second gate inductor (LG2) connected between a control input (105) of the second controllable semiconductor switch (S2) and a common output node (111) of the first and second controllable semiconductor switches (S1, S2),
a resonant network connected to the common output node (111),
wherein a switching frequency of the first self-oscillating resonant half bridge power converter is larger than 1 MHz; and
a start-up circuit configured to inject a first voltage pulse into the control input (103) of the first controllable semiconductor switch (S1) for switching the first semiconductor switch (S1) from a non-conducting state to a conducting state to switch the first self-oscillating resonant half bridge power converter from an inactive state to an active state;
**characterised in that**
a duration of the first voltage pulse is less than a duration of one switching cycle of the first self-oscillating resonant half bridge power converter, such as between 1 % and 50 % of the duration of the one switching cycle; said one switching cycle representing a switching frequency of the first self-oscillating resonant half bridge power converter in its active state.

2. A power converter assembly according (100) to claim 1, wherein the first gate inductor (LG1) and the second gate inductor (LG2) are magnetically coupled in opposite phase forcing substantially 180 degrees phase shift between a control voltage of the first controllable semiconductor switch (S1) and a control voltage of the second controllable semiconductor switch (S2).

3. A power converter assembly according to claim 2, wherein a mutual magnetic coupling coefficient between the first gate inductor (LG1) and the second gate inductor (LG2) is larger than 0.1, or even more preferably larger than 0.4.

4. A power converter assembly (100) according to any of the preceding claims, wherein an amplitude of the first voltage pulse is larger than a threshold voltage of the first controllable semiconductor switch (S1) for example at least 1 V larger than said threshold voltage.

5. A power converter assembly (100) according to any of the preceding claims, wherein the start-up circuit comprises a first DC voltage source (120) in series with a first pulse switch (P1) for generating the first voltage pulse.

6. A power converter assembly (100) according to claim 5, wherein the first pulse switch (P1) is configured for generating the first voltage pulse by selectively connecting and disconnecting a DC voltage of the first DC voltage source (120) from the control input (103) of the first controllable semiconductor switch (S1).

7. A power converter assembly (100) according to claim 5 or 6, further comprising a rectifying element (D1) connected in series with the first pulse switch (P1) for blocking reverse current flow through the first pulse switch (P1); said reverse current flow being current flowing from the control input (103) of the first controllable semiconductor switch (S1) into the first pulse voltage source (120) or into the first pulse switch.

8. A power converter assembly (100) according to any of the preceding claims, wherein the first gate inductor (LG1) is connected to a source or emitter terminal of the first controllable semiconductor switch (S1) and/or the second gate inductor (LG2) is connected to a source or emitter terminal of the second controllable semiconductor switch (S2).

9. A resonant power converter assembly (100) according to any of the preceding claims, further comprising:
a resistive path connected from the common output node (111) to the first DC supply rail (V_{cc}) to set a DC bias voltage at the common output node (111) in an inactive state of the first self-oscillating resonant half bridge power converter.

10. A power converter assembly (100) according to any of the preceding claims, further comprising:
a second self-oscillating resonant half bridge power converter connected in series with the first self-oscillating resonant half bridge power converter to the second DC supply rail (GND),
said second self-oscillating resonant half bridge power converter comprising:
a third controllable semiconductor switch (S3) and a fourth controllable semiconductor switch (S4) connected in series between an output of the second controllable semiconductor switch (415) and the second DC supply rail,
a third gate inductor (LG3) connected between a control input of the third controllable semiconductor switch and a second bias voltage,
a fourth gate inductor (LG4) connected between a control input of the fourth controllable semiconductor switch (S4) and a common output node (411a) of the third and fourth semiconductor switches (S3, S4); wherein
the start-up circuit is further configured to generate and inject a second voltage pulse into the control input of the third semiconductor switch to switch the third semiconductor switch from a non-conducting state to a conducting state.

11. A power converter assembly (100) according to claim 10, wherein the third gate inductor (LG3) and the fourth gate inductor (LG4) are magnetically coupled in opposite phase forcing substantially 180 degrees phase shift between a control voltage of the third controllable semiconductor switch and a control voltage of the fourth controllable semiconductor switch.

12. A power converter assembly (100) according to claim 10 or 11, wherein the start-up circuit comprises a second DC voltage source connected in series with a second pulse switch.

13. A power converter assembly (100) according to any of claims 10-12, wherein the start-up circuit is configured to synchronize the first voltage pulse and the second voltage pulse to align on-set times, and optionally durations, of the first and second voltage pulses.

14. A method of switching a self-oscillating resonant half bridge power converter from an inactive state to an active state, said method comprising:
- energizing an output node (111) of an inverter stage of the resonant half bridge power converter through a resistive path (R1) to a DC supply rail (V_{cc}),
- generating a voltage pulse of a predetermined duration and amplitude,
- applying the voltage pulse to a control input (103) of a semiconductor switch (S1) of the inverter stage to switch the semiconductor switch (S1) from a non-conducting state to a conducting state and thereby induce self-oscillation of a feedback loop around the inverter stage; wherein a switching frequency of the self-oscillating resonant half bridge power converter in its active state is larger than 1 MHz;
**characterised in that**
the predetermined duration of the voltage pulse is less than a duration of one switching cycle of the self-oscillating resonant half bridge power converter, such as between 1 % and 50 % of the duration of the one switching cycle; said one switching cycle representing a switching frequency of the first self-oscillating resonant half bridge power converter in its active state.

## Patentansprüche

1. Leistungswandleranordnung (100), umfassend:
einen ersten selbstschwingenden resonanten Halbbrücken-Leistungswandler, umfassend:
einen ersten steuerbaren Halbleiterschalter (S1) und einen zweiten steuerbaren Halbleiterschalter (S2), die zwischen einer ersten Gleichstromversorgungsschiene (V_{cc}) und einer zweiten Gleichstromversorgungsschiene (GND) in Reihe geschaltet sind,
einen ersten Gate-Induktor (LG1), der zwischen einem Steuereingang (103) des ersten steuerbaren Halbleiterschalters (S1) und einer ersten Vorspannung, wie etwa die erste Gleichstromversorgungsschiene, geschaltet ist,
einen zweiten Gate-Induktor (LG2), der zwischen einem Steuereingang (105) des zweiten steuerbaren Halbleiterschalters (S2) und einem gemeinsamen Ausgangsknoten (111) des ersten und des zweiten steuerbaren Halbleiterschalters (S1, S2) geschaltet ist,
ein resonantes Netzwerk, das an dem gemeinsamen Ausgangsknoten (111) geschaltet ist,
wobei eine Schaltfrequenz des ersten selbstschwingenden resonanten Halbbrücken-Leistungswandlers größer als 1 MHz ist; und
eine Anlaufschaltung, die so ausgelegt ist, dass sie einen ersten Spannungsimpuls in den Steuereingang (103) des ersten steuerbaren Halbleiterschalters (S1) injiziert, um den ersten Halbleiterschalter (S1) aus einem nichtleitenden Zustand in einen leitenden Zustand zu schalten, um den ersten selbstschwingenden resonanten Halbbrücken-Leistungswandler aus einem inaktiven Zustand in einen aktiven Zustand zu schalten;
**dadurch gekennzeichnet, dass**
eine Dauer des ersten Spannungsimpulses kleiner ist als eine Dauer eines Schaltzyklus des ersten selbstschwingenden resonanten Halbbrücken-Leistungswandlers, wie etwa zwischen 1 % und 50 % der Dauer des einen Schaltzyklus; wobei der eine Schaltzyklus eine Schaltfrequenz des ersten selbstschwingenden resonanten Halbbrücken-Leistungswandlers in dessen aktivem Zustand darstellt.

2. Leistungswandleranordnung (100) nach Anspruch 1, wobei der erste Gate-Induktor (LG1) und der zweite Gate-Induktor (LG2) gegenphasig magnetisch gekoppelt sind, wodurch im Wesentlichen 180 Grad Phasenverschiebung zwischen einer Steuerspannung des ersten steuerbaren Halbleiterschalters (S1) und einer Steuerspannung des zweiten steuerbaren Halbleiterschalters (S2) erzwungen werden.

3. Leistungswandleranordnung (100) nach Anspruch 2, wobei ein Koeffizient der gegenseitigen magnetischen Kopplung zwischen dem ersten Gate-Induktor (LG1) und dem zweiten Gate-Induktor (LG2) größer als 0,1, oder noch bevorzugter größer als 0,4 ist.

4. Leistungswandleranordnung (100) nach einem der vorstehenden Ansprüche, wobei eine Amplitude des ersten Spannungsimpulses größer ist als eine Schwellenspannung des ersten steuerbaren Halbleiterschalters (S1), zum Beispiel mindestens 1 V größer als die Schwellenspannung.

5. Leistungswandleranordnung (100) nach einem der vorstehenden Ansprüche, wobei die Anlaufschaltung eine erste Gleichstromspannungsquelle (120) in Reihenschaltung mit einem ersten Impulsschalter (P1) umfasst, um den ersten Spannungsimpuls zu erzeugen.

6. Leistungswandleranordnung (100) nach Anspruch 5, wobei der erste Impulsschalter (P1) dafür ausgelegt ist, den ersten Spannungsimpuls zu erzeugen, indem er eine Gleichstromspannung der ersten Gleichstromspannungsquelle (120) selektiv an den Steuereingang (103) des ersten steuerbaren Halbleiterschalters (S1) schaltet und von diesem trennt.

7. Leistungswandleranordnung (100) nach Anspruch 5 oder 6, die weiter ein Gleichrichterelement (D1) umfasst, das mit dem ersten Impulsschalter (P1) in Reihe geschaltet ist, um umgekehrten Stromfluss durch den ersten Impulsschalter (P1) zu sperren; wobei es sich bei dem umgekehrten Stromfluss um Strom handelt, der vom Steuereingang (103) des ersten steuerbaren Halbleiterschalters (S1) in die erste Impulsspannungsquelle (120) oder in den ersten Impulsschalter fließt.

8. Leistungswandleranordnung (100) nach einem der vorstehenden Ansprüche, wobei der erste Gate-Induktor (LG1) an einen Quellen- oder Emitteranschluss des ersten steuerbaren Halbleiterschalters (S1) geschaltet ist, und/oder der zweite Gate-Induktor (LG2) an einen Quellen- oder Emitteranschluss des zweiten steuerbaren Halbleiterschalters (S2) geschaltet ist.

9. Resonante Leistungswandleranordnung (100) nach einem der vorstehenden Ansprüche, weiter umfassend:
einen Widerstandspfad, der vom gemeinsamen Ausgangsknoten (111) an die erste Gleichstromversorgungsschiene (V_{cc}) geschaltet ist, um in einem inaktiven Zustand des ersten selbstschwingenden resonanten Halbbrücken-Leistungswandlers eine Gleichstromvorspannung am gemeinsamen Ausgangsknoten (111) einzustellen.

10. Leistungswandleranordnung (100) nach einem der vorstehenden Ansprüche, weiter umfassend:
einen zweiten selbstschwingenden resonanten Halbbrücken-Leistungswandler, der mit dem ersten selbstschwingenden resonanten Halbbrücken-Leistungswandler in Reihe an die zweite Gleichstromversorgungsschiene (GND) geschaltet ist,
wobei der zweite selbstschwingende resonante Halbbrücken-Leistungswandler umfasst:
einen dritten steuerbaren Halbleiterschalter (S3) und einen vierten steuerbaren Halbleiterschalter (54), die zwischen einem Ausgang des zweiten steuerbaren Halbleiterschalters (415) und der zweiten Gleichstromversorgungsschiene in Reihe geschaltet sind,
einen dritten Gate-Induktor (LG3), der zwischen einem Steuereingang des dritten steuerbaren Halbleiterschalters und einer zweiten Vorspannung geschaltet ist,
einen vierten Gate-Induktor (LG4), der zwischen einem Steuereingang des vierten steuerbaren Halbleiterschalters (S4) und einem gemeinsamen Ausgangsknoten (411a) des dritten und des vierten Halbleiterschalters (S3, S4) geschaltet ist; wobei
die Anlaufschaltung weiter so ausgelegt ist, dass sie einen zweiten Spannungsimpuls erzeugt und in den Steuereingang des dritten Halbleiterschalters injiziert, um den dritten Halbleiterschalter aus einem nichtleitenden Zustand in einen leitenden Zustand zu schalten.

11. Leistungswandleranordnung (100) nach Anspruch 10, wobei der dritte Gate-Induktor (LG3) und der vierte Gate-Induktor (LG4) gegenphasig magnetisch gekoppelt sind, wodurch im Wesentlichen 180 Grad Phasenverschiebung zwischen einer Steuerspannung des dritten steuerbaren Halbleiterschalters und einer Steuerspannung des vierten steuerbaren Halbleiterschalters erzwungen werden.

12. Leistungswandleranordnung (100) nach Anspruch 10 oder 11, wobei die Anlaufschaltung eine zweite Gleichstromspannungsquelle umfasst, die mit einem zweiten Impulsschalter in Reihe geschaltet ist.

13. Leistungswandleranordnung (100) nach einem der Ansprüche 10-12, wobei die Anlaufschaltung so ausgelegt ist, dass sie den ersten Spannungsimpuls und den zweiten Spannungsimpuls synchronisiert, um Einssetzzeiten, und gegebenenfalls Dauern, des ersten und des zweiten Spannungsimpulses anzugleichen.

14. Verfahren zum Schalten eines selbstschwingenden resonanten Halbbrücken-Leistungswandlers aus einem inaktiven Zustand in einen aktiven Zustand, wobei das Verfahren umfasst:
- Erregen eines Ausgangsknotens (111) einer Inverterstufe des resonanten Halbbrücken-Leistungswandlers durch einen Widerstandspfad (R1) zu einer Gleichstromversorgungsschiene (V_{cc}),
- Erzeugen eines Spannungsimpulses einer vorbestimmten Dauer und Amplitude,
- Anlegen des Spannungsimpulses an einen Steuereingang (103) eines Halbleiterschalters (S1) der Inverterstufe, um den Halbleiterschalter (S1) aus einem nichtleitenden Zustand in einen leitenden Zustand zu schalten und dadurch Selbstschwingung einer Rückkopplungsschleife um die Inverterstufe zu induzieren; wobei eine Schaltfrequenz des selbstschwingenden resonanten Halbbrücken-Leistungswandlers in dessen aktivem Zustand größer als 1 MHz ist;
**dadurch gekennzeichnet, dass**
die vorbestimmte Dauer des Spannungsimpulses kleiner ist als eine Dauer eines Schaltzyklus des selbstschwingenden resonanten Halbbrücken-Leistungswandlers, wie etwa zwischen 1 % und 50 % der Dauer des einen Schaltzyklus; wobei der eine Schaltzyklus eine Schaltfrequenz des ersten selbstschwingenden resonanten Halbbrücken-Leistungswandlers in dessen aktivem Zustand darstellt.

## Revendications

1. Ensemble convertisseur de puissance (100) comprenant :
un premier convertisseur de puissance à demi-pont résonant auto-oscillant comprenant :
un premier commutateur à semi-conducteurs pouvant être commandé (S1) et un deuxième commutateur à semi-conducteurs pouvant être commandé (S2) connectés en série entre un premier rail d'alimentation CC (V_{cc}) et un second rail d'alimentation CC (GND),
un premier inducteur de grille (LG1) connecté entre une entrée de commande (103) du premier commutateur à semi-conducteurs pouvant être commandé (S1) et une première tension de polarisation, par exemple le premier rail d'alimentation CC,
un second inducteur de grille (LG2) connecté entre une entrée de commande (105) du deuxième commutateur à semi-conducteurs pouvant être commandé (S2) et un noeud de sortie commun (111) des premier et deuxième commutateurs à semi-conducteurs pouvant être commandés (S1, S2),
un réseau résonant connecté au noeud de sortie commun (111),
dans lequel une fréquence de commutation du premier convertisseur de puissance à demi-pont résonant auto-oscillant est supérieure à 1 MHz ; et
un circuit de démarrage configuré pour injecter une première impulsion de tension dans l'entrée de commande (103) du premier commutateur à semi-conducteurs pouvant être commandé (S1) pour commuter le premier commutateur à semi-conducteurs (S1) d'un état non conducteur à un état conducteur pour commuter le premier convertisseur de puissance à demi-pont résonant auto-oscillant d'un état inactif à un état actif ;
**caractérisé en ce que**
une durée de la première impulsion de tension est inférieure à une durée d'un cycle de commutation du premier convertisseur de puissance à demi-pont résonant auto-oscillant, par exemple entre 1 % et 50 % de la durée de l'un cycle de commutation ; ledit un cycle de commutation représentant une fréquence de commutation du premier convertisseur de puissance à demi-pont résonant auto-oscillant dans son état actif.

2. Ensemble convertisseur de puissance (100) selon la revendication 1, dans lequel le premier inducteur de grille (LG1) et le second inducteur de grille (LG2) sont couplés magnétiquement dans une phase opposée obligeant à un décalage de phase de sensiblement 180 degrés entre une tension de commande du premier commutateur à semi-conducteurs pouvant être commandé (S1) et une tension de commande du deuxième commutateur à semi-conducteurs pouvant être commandé (S2).

3. Ensemble convertisseur de puissance (100) selon la revendication 2, dans lequel un coefficient de couplage mécanique réciproque entre le premier inducteur de grille (LG1) et le second inducteur de grille (LG2) est supérieur à 0,1, ou même plus préférentiellement supérieur à 0,4.

4. Ensemble convertisseur de puissance (100) selon l'une quelconque des revendications précédentes, dans lequel une amplitude de la première impulsion de tension est supérieure à une tension seuil du premier commutateur à semi-conducteurs pouvant être commandé (S1) par exemple supérieure d'au moins 1 V à ladite tension seuil.

5. Ensemble convertisseur de puissance (100) selon l'une quelconque des revendications précédentes, dans lequel le circuit de démarrage comprend une première source de tension CC (120) en série avec un premier commutateur à impulsions (P1) pour générer la première impulsion de tension.

6. Ensemble convertisseur de puissance (100) selon la revendication 5, dans lequel le premier commutateur à impulsions (P1) est configuré pour générer la première impulsion de tension en connectant et déconnectant sélectivement une tension CC de la première source de tension CC (120) de l'entrée de commande (103) du premier commutateur à semi-conducteurs pouvant être commandé (S1).

7. Ensemble convertisseur de puissance (100) selon la revendication 5 ou 6, comprenant en outre un élément redresseur (D1) connecté en série au premier commutateur à impulsions (P1) pour bloquer un flux de courant inverse par le biais du premier commutateur à impulsions (P1) ; ledit flux de courant inverse étant un courant s'écoulant depuis l'entrée de commande (103) du premier commutateur à semi-conducteurs pouvant être commandé (S1) dans la première source de tension à impulsions (120) ou dans le premier commutateur à impulsions.

8. Ensemble convertisseur de puissance (100) selon l'une quelconque des revendications précédentes, dans lequel le premier inducteur de grille (LG1) est connecté à une borne de source ou d'émetteur du premier commutateur à semi-conducteurs pouvant être commandé (S1) et/ou le second inducteur de grille (LG2) est connecté à une borne de source ou d'émetteur du deuxième commutateur à semi-conducteurs pouvant être commandé (S2).

9. Ensemble convertisseur de puissance résonant (100) selon l'une quelconque des revendications précédentes, comprenant en outre :
un chemin résistif connecté depuis le noeud de sortie commun (111) au premier rail d'alimentation CC (V_{cc}) pour mettre une tension de polarisation CC au niveau du noeud de sortie commun (111) dans un état inactif du premier convertisseur de puissance à demi-pont résonant auto-oscillant.

10. Ensemble convertisseur de puissance (100) selon l'une quelconque des revendications précédentes, comprenant en outre :
un second convertisseur de puissance à demi-pont résonant auto-oscillant connecté en série avec le premier convertisseur de puissance à demi-pont résonant auto-oscillant au second rail d'alimentation CC (GND),
ledit second convertisseur de puissance à demi-pont résonant auto-oscillant comprenant :
un troisième commutateur à semi-conducteurs pouvant être commandé (S3) et un quatrième commutateur à semi-conducteurs pouvant être commandé (S4) connectés en série entre une sortie du deuxième commutateur à semi-conducteurs pouvant être commandé (415) et le second rail d'alimentation CC ;
un troisième inducteur de grille (LG3) connecté entre une entrée de commande du troisième commutateur à semi-conducteurs pouvant être commandé et une seconde tension de polarisation,
un quatrième inducteur de grille (LG4) connecté entre une entrée de commande du quatrième commutateur à semi-conducteurs pouvant être commandé (S4) et un noeud de sortie commun (411a) des troisième et quatrième commutateurs à semi-conducteurs (S3, S4) ; dans lequel
le circuit de démarrage est en outre configuré pour générer et injecter une seconde impulsion de tension dans l'entrée de commande du troisième commutateur à semi-conducteurs pour commuter le troisième commutateur à semi-conducteurs d'un état non conducteur à un état conducteur.

11. Ensemble convertisseur de puissance (100) selon la revendication 10, dans lequel le troisième inducteur de grille (LG3) et le quatrième inducteur de grille (LG4) sont couplés de manière magnétique dans une phase opposée obligeant à un décalage de phase de sensiblement de 180 degrés entre une tension de commande du troisième commutateur à semi-conducteurs pouvant être commandé et une tension de commande du quatrième commutateur à semi-conducteurs pouvant être commandé.

12. Ensemble convertisseur de puissance (100) selon la revendication 10 ou 11, dans lequel le circuit de démarrage comprend une seconde source de tension CC connectée en série avec un second commutateur à impulsions.

13. Ensemble convertisseur de puissance (100) selon l'une quelconque des revendications 10 à 12, dans lequel le circuit de démarrage est configuré pour synchroniser la première impulsion de tension et la seconde impulsion de tension pour aligner des heures de début, et facultativement des durées, des première et seconde impulsions de tension.

14. Procédé de commutation d'un convertisseur de puissance à demi-pont résonant auto-oscillant d'un état inactif vers un état actif, ledit procédé comprenant :
- l'excitation d'un noeud de sortie (111) d'un étage d'onduleur du convertisseur de puissance à demi-pont résonant par le biais d'un chemin résistif (R1) vers un rail d'alimentation CC (V_{cc}),
- la génération d'une impulsion de tension d'une durée et d'une amplitude prédéterminées,
- l'application de l'impulsion de tension sur une entrée de commande (103) d'un commutateur à semi-conducteurs (S1) de l'étage d'onduleur pour commuter le commutateur à semi-conducteurs (S1) d'un état non conducteur sur un état conducteur et ainsi induire une auto-oscillation d'une boucle de rétroaction autour de l'étage d'onduleur ; dans lequel une fréquence de commutation du convertisseur de puissance à demi-pont résonant auto-oscillant dans son état actif est supérieure à 1 MHz ;
**caractérisé en ce que**
la durée prédéterminée de l'impulsion de tension est inférieure à une durée d'un cycle de commutation du convertisseur de puissance à demi-pont résonant auto-oscillant, par exemple entre 1 % et 50 % de la durée de l'un cycle de commutation ; ledit un cycle de commutation représentant une fréquence de commutation du premier convertisseur de puissance à demi-pont résonant auto-oscillant dans son état actif.
